(19) Europäisches Patentamt European Patent Office Office européen des brevets

(11) **EP 3 542 185 B1**

(12) **FASCICULE DE BREVET EUROPEEN**

(45) Date de publication et mention de la délivrance du brevet:
**19.08.2020 Bulletin 2020/34**

(21) Numéro de dépôt: **17804244.6**

(22) Date de dépôt: **13.11.2017**

(51) Int Cl.:
*G01T 1/00* (2006.01)        *G01T 1/20* (2006.01)

(86) Numéro de dépôt international:
**PCT/FR2017/053085**

(87) Numéro de publication internationale:
**WO 2018/091807 (24.05.2018 Gazette 2018/21)**

(54) **DÉTECTEUR A SCINTILLATION POUR LA DÉTECTION ET/OU LA MESURE DE RADIONUCLÉIDES DANS UN FLUIDE**

SZINTILLATIONSDETEKTOR ZUR DETEKTION UND/ODER MESSUNG VON RADIONUKLIDEN IN EINER FLÜSSIGKEIT

SCINTILLATION DETECTOR FOR DETECTING AND/OR MEASURING RADIONUCLIDES IN A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2016 FR 1661049**

(43) Date de publication de la demande:
**25.09.2019 Bulletin 2019/39**

(73) Titulaire: **Commissariat à l'Energie Atomique et aux Energies Alternatives
75015 Paris (FR)**

(72) Inventeurs:
• **BOUDERGUI, Karim
28630 Nogent-le-Phaye (FR)**

• **KONDRASOVS, Vladimir
91120 Palaiseau (FR)**
• **BOURBOTTE, Jean-Michel
28700 Aunay sous Auneau (FR)**

(74) Mandataire: **Brevalex
95, rue d'Amsterdam
75378 Paris Cedex 8 (FR)**

(56) Documents cités:
**US-A- 3 005 100        US-A- 5 793 046
US-A1- 2010 276 599**

• **ERHARD LORENZ ET AL: "Plastic scintillation filament detector system for <14>CO2 breath-analysis tests", MEDICAL PHYSICS, AIP, MELVILLE, NY, US, vol. 5, no. 3, 1 mai 1978 (1978-05-01), pages 195-198, XP001430653, ISSN: 0094-2405**

EP 3 542 185 B1

**Description**

**DOMAINE TECHNIQUE**

Le domaine de l'invention est celui de la détection et de la mesure en ligne de la contamination radioactive d'un fluide. Il concerne plus particulièrement la détection et la mesure de la contamination radioactive de type alpha et/ou béta dans une canalisation de fluide, en particulier une canalisation d'un liquide, notamment pour détecter et mesurer en ligne la présence d'une source radioactive alpha et/ou béta dans une canalisation d'eau potable.

Les domaines d'application de l'invention sont notamment la radioprotection et la sécurité.

**ÉTAT DE LA TECHNIQUE ANTÉRIEURE**

Afin d'éviter des actions malveillantes, terroristes ou simplement accidentelles de contamination radioactive de réseaux de distribution de fluides, comme par exemple les réseaux de distribution d'air d'une salle blanche ou les réseaux de distribution d'eau potable, il est primordial de pouvoir détecter au plus tôt la présence d'éléments radioactifs dans le fluide.

Actuellement, la détection en continu de rayonnements gamma dans l'air ou dans l'eau est facilement réalisable et dispose déjà de nombreuses solutions. La détection de rayonnements béta ou encore alpha de façon continue (c'est-à-dire en ligne) est quant à elle beaucoup plus difficile du fait du faible parcours dans l'air, et encore plus dans l'eau, de ces rayonnements.

A titre d'illustration, nous avons compilé dans le tableau ci-dessous les distances parcourues par des particules beta et alpha, respectivement dans l'air et dans l'eau, en fonction de l'énergie (données trouvées dans le document **[1]**).

| Energie | Distance parcourue par une particule alpha | | Distance parcourue par un électron | |
|---|---|---|---|---|
| | Air ($12{,}04.10^{-4}$ g.cm$^{-3}$) | Eau (1 g.cm$^{-3}$) | Air ($12{,}04.10^{-4}$ g.cm$^{-3}$) | Eau (1 g.cm$^{-3}$) |
| 5 keV | 93,4 $\mu$m | 989 Å | 0,4 mm | 450 nm |
| 20 keV | 313 $\mu$m | 3775 Å | 8 mm | 8,5 $\mu$m |
| 50 keV | 660 $\mu$m | 8150 Å | 4cm | 43 $\mu$m |
| 100 keV | 1,1 mm | 1,3 $\mu$m | 13,5 cm | 0,14 mm |
| 500 keV | 3,1 mm | 3,6 $\mu$m | 1,6 m | 0,2 cm |
| 1 MeV | 5,2 mm | 5,9 $\mu$m | 4,1 m | 0,4 cm |
| 2 MeV | 1 cm | 11,4 $\mu$m | 9 m | 1 cm |
| 3 MeV | 1,7 cm | 18,4 $\mu$m | 13,7 m | 1,5 cm |
| 5 MeV | 3,5 cm | 37,3 $\mu$m | 23 m | 2,5 cm |
| 7 MeV | 5,9 cm | 62 $\mu$m | 31,2 m | 3,5 cm |
| 10 MeV | 10,4 cm | 110 $\mu$m | 43 m | 5 cm |
| 15 MeV | 20,5 cm | 215 $\mu$m | 61,5 m | 7,2 cm |
| 20 MeV | 33,6 cm | 353 $\mu$m | 78,4 m | 9,3 cm |
| 50 MeV | 1,7 m | 1,8 mm | 161 m | 19,8 cm |
| 100 MeV | 5,83 m | 6,3 mm | 263 m | 32,5 cm |

On peut ainsi constater que le parcours d'un rayonnement, dans l'eau, va de 43 $\mu$m à 1 cm pour les rayonnements béta ayant une énergie allant de 50 keV à 2 MeV et de 18 $\mu$m à 62 $\mu$m pour les rayonnements alpha ayant une énergie allant de 3 MeV à 7 MeV.

Actuellement, les systèmes de détection les plus utilisés sont des détecteurs à semi-conducteurs ou bien encore des détecteurs à scintillation à base de scintillateurs inorganiques ou de scintillateurs organiques (en particulier de scintillateurs plastiques) ayant des surfaces de détection relativement petites, ce qui impose une analyse hors ligne avec des temps de mesure supérieurs à 1h. La méthode classique pour réaliser ce type d'analyse hors ligne consiste à effectuer un ensemble de prélèvements qui sont ensuite transmis à un laboratoire où sont réalisés différents examens tels qu'un comptage par scintillation liquide ou une méthode calorimétrique.

Un système de détection et de mesure, en ligne et de façon continue, de la radioactivité dans un fluide est connu du document **[2]**. Ce système permet la détection et la mesure de la contamination beta, alpha, mais également gamma d'un fluide, et notamment de l'eau.

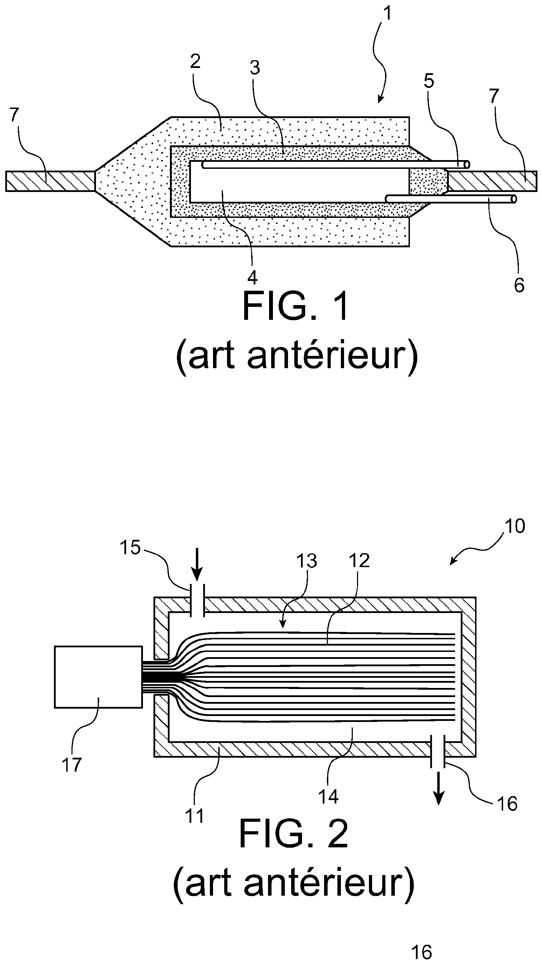

Ce système de l'art antérieur est représenté dans la figure 1: il comporte un détecteur 1 qui est composé de deux scintillateurs plastiques en forme de cylindre creux (un cylindre 2 pour les rayonnements gamma et un cylindre 3 pour les rayonnements beta et alpha), emboîtés l'un dans l'autre pour former au centre une chambre de mesure 4 dans laquelle le fluide à contrôler circule. Le fluide à contrôler (par exemple, de l'eau) pénètre dans la chambre de mesure 4 par une entrée de fluide 5 située à une extrémité de la chambre de mesure et sort par une sortie de fluide 6 située à l'autre extrémité de la chambre de mesure. Chacun des cylindres en scintillateur plastique est relié par un guide d'onde 7 à un dispositif de détection de photons (non représenté), par exemple un photomultiplicateur.

L'efficacité de détection des particules beta et alpha du système illustré dans la figure 1 est directement dépendante du rapport $(V_m/V_t)$, $V_m$ étant le volume de mesure (c'est-à-dire le volume dans lequel il est possible de détecter des particules beta et alpha) et $V_t$ étant le volume total de fluide contenu dans la chambre de mesure. Etant donné que la distance parcourue par les particules beta et alpha dans un fluide est relativement faible, le volume de mesure $V_m$ est faible. L'efficacité de mesure du système de détection va donc être d'autant plus faible que la limite de détection sera basse.

Afin d'augmenter les occurrences d'interactions entre les particules alpha et beta et le scintillateur plastique, il est proposé dans le document **[2]** de remplir la chambre de mesure du système par des billes en un matériau scintillateur plastique ayant un diamètre compris entre 250 $\mu$m et 500 $\mu$m. Une telle solution présente cependant l'inconvénient de ne prendre en compte que les billes se trouvant directement face au photomultiplicateur. En outre, du fait de la différence d'indice entre le fluide et les billes, il y a une mauvaise propagation des photons vers le photomultiplicateur. L'ensemble de ces inconvénients se traduit par une dégradation de l'efficacité de détection (le volume de mesure pris en compte étant plus faible).

Par ailleurs, il est connu du document **[3]** un détecteur de radiations de faibles énergies dans un fluide, par exemple des particules béta produites par la décroissance naturelle du tritium dans de l'eau. Comme illustré dans la figure 2, ce détecteur 10 comporte une chambre de mesure cylindrique 11 ayant une entrée de fluide 15 et une sortie de fluide 16 et dans laquelle est disposé un faisceau 13 de fibres optiques scintillantes 12 dont les extrémités proximales sont reliées à un photomultiplicateur 17, disposé hors de la chambre de mesure 11. Le détecteur décrit dans le document **[3]** permet d'augmenter le volume de mesure $(V_m)$, ce dernier étant lié directement au nombre de fibres utilisées. Cependant, l'arrivée du fluide 14 directement sur les fibres génère des turbulences. Les fibres étant en permanence en mouvement, la géométrie de mesure varie en permanence. Ces variations se traduisent par des fluctuations supplémentaires importantes du taux de comptage. Ces fluctuations peuvent être considérées comme un bruit multiplicatif sur le taux de comptage et elles peuvent difficilement être filtrées.

Les inventeurs se sont fixé comme objectif d'améliorer les contrôles en ligne de la contamination d'un fluide par des radionucléides et d'améliorer les limites de détection de radionucléides dans un fluide. Ils ont notamment cherché à concevoir un système capable de mesurer les ambiances alpha et/ou béta d'un fluide, de façon continu, sans piquage ou prélèvement.

## EXPOSÉ DE L'INVENTION

Cet objectif est atteint grâce à un détecteur à scintillation pour la mesure et/ou la détection de radionucléides dans un fluide, ledit détecteur comportant :

- une chambre de mesure destinée à recevoir ledit fluide, ladite chambre comportant une entrée de fluide et une sortie de fluide afin d'autoriser une circulation du fluide dans la chambre ;
- un photomultiplicateur ;
- une pluralité de fibres optiques scintillantes regroupées ensemble pour former un faisceau de fibres, lesdites fibres optiques scintillantes étant optiquement connectée au photomultiplicateur, le faisceau de fibres étant au moins partiellement logé dans la chambre de mesure ;

le détecteur étant caractérisé en ce que la chambre de mesure est munie d'un premier et d'un deuxième séparateur délimitant une zone d'introduction comportant l'entrée de fluide, une zone d'extraction comportant la sortie de fluide et une zone de mesure, intermédiaire aux zones d'introduction et d'extraction, dans laquelle les fibres optiques scintillantes du faisceau sont déployées,

le premier et le deuxième séparateur étant chacun pourvu d'une pluralité d'ouvertures traversantes configurées pour établir un écoulement laminaire du fluide dans la zone de mesure.

En fait, par cette configuration particulière, on cherche à garantir un écoulement laminaire, homogène et non turbulent au fluide à analyser. On rappelle qu'un écoulement laminaire d'un fluide est un mode d'écoulement dans lequel l'ensemble du fluide s'écoule plus ou moins dans la même direction, sans que d'éventuelles différences locales se contrarient, par opposition au régime turbulent, qui est fait de tourbillons qui se contrarient mutuellement. Grâce au détecteur selon l'invention, les inventeurs ont réussi à améliorer les limites de détection de radionucléides dans un fluide en diminuant les fluctuations statistiques qui apparaissent lors de la présence de turbulences dans le fluide circulant dans la chambre de mesure (on parlera aussi de flux de fluide pour désigner ce fluide en circulation). Du fait de la conception particulière du détecteur, on régule le flux de fluide dans la zone de mesure, c'est-à-dire là où les fibres optiques scintillantes sont déployées. En minimisant les turbulences, la géométrie de mesure est plus stable et les fluctuations statistiques du taux de comptage sont ainsi diminuées et la limite de détection en est d'autant améliorée.

De préférence, les ouvertures traversantes des premier et deuxième séparateurs sont configurées pour répartir de manière homogène le fluide dans la zone de mesure. Ceci a pour effet de réguler le flux de fluide dans la zone de mesure et de diminuer les turbulences. Cette répartition homogène du flux peut être obtenue en ayant une répartition homogène des ouvertures traversantes des premier et deuxième séparateurs, ainsi qu'une forme et une taille homogènes.

Certains aspects préférés mais non limitatifs de ce détecteur sont les suivants :

- la chambre de mesure comporte un corps latéral qui s'étend selon une direction longitudinale et chacun des premier et deuxième séparateurs comporte une plaque qui est disposée transversalement à la direction longitudinale et qui est solidaire du corps latéral, la pluralité d'ouvertures traversantes étant disposées dans la plaque ;
- le premier séparateur comporte en outre un orifice traversant qui est dimensionné pour permettre le passage du faisceau de fibres ;
- le premier séparateur comporte en outre un élément tubulaire qui est solidaire d'une face de la plaque, l'élément tubulaire et la plaque ayant un orifice traversant commun qui est dimensionné pour permettre le passage du faisceau de fibres, l'élément tubulaire étant configuré pour isoler le faisceau de fibres du fluide entrant dans la zone d'introduction ;
- le faisceau de fibres est agencé essentiellement parallèle à la direction longitudinale ;
- la plaque des premier et deuxième séparateur est un disque et l'orifice traversant du premier séparateur est un trou circulaire central ;
- les zones d'introduction, de mesure et d'extraction se succèdent selon la direction longitudinale et l'entrée de fluide et la sortie de fluide sont disposées transversalement à la direction longitudinale ;
- les ouvertures traversantes de la pluralité d'ouvertures traversantes du premier séparateur sont agencées selon un premier motif et sont équidistantes les unes des autres, et les ouvertures traversantes de la pluralité d'ouvertures traversantes du deuxième séparateur sont agencées selon un deuxième motif et sont équidistantes les unes des autres ; de préférence, les premier et deuxième motifs sont identiques ;
- la pluralité d'ouvertures traversantes du premier séparateur et la pluralité d'ouvertures traversantes du deuxième séparateur sont des trous circulaires ayant un même diamètre ;
- chacune des ouvertures traversantes du premier séparateur est disposée en face d'une des ouvertures traversantes du deuxième séparateur ;
- le faisceau de fibres comprend une portion proximale, qui est reliée au photomultiplicateur, et une portion distale, les fibres optiques scintillantes étant agencées serrées les unes contre les autres dans la portion proximale et espacées les unes des autres dans au moins une partie de la portion distale ;
- la portion distale du faisceau de fibres comprend au moins un élément configuré pour espacer les fibres les unes des autres. Il peut par exemple s'agir d'une résine, disposée entre les fibres, qui va permettre de les désolidariser et de les écarter les unes des autres.

L'invention concerne également une utilisation d'un détecteur à scintillation tel que défini ci-dessus pour la détection d'une contamination par des radionucléides dans un flux d'un fluide, de préférence dans un flux d'eau potable.

Le détecteur selon l'invention présente de nombreux avantages. Il permet notamment d'augmenter facilement le volume de mesure en augmentant la surface de détection, qui est directement liée au nombre et à la longueur des fibres optiques scintillantes utilisées. En outre, le détecteur selon l'invention permet de détecter des rayonnements beta et/ou alpha dans un fluide, et notamment dans l'eau. Pour cela, on préférera utiliser des fibres optiques scintillantes à gaine simple et de faible diamètre (inférieur à 300 $\mu$m), l'épaisseur de la gaine étant la plus fine possible. Enfin, le détecteur selon l'invention présente l'avantage que sa réalisation est peu coûteuse.

Le détecteur selon l'invention a de nombreuses applications. Il peut notamment être mis en œuvre pour la surveillance de la radioactivité beta et alpha dans les réseaux de distribution d'eau dans le cadre :

- d'attaques terroristes visant à contaminer les réseaux de distribution d'eau potable (château d'eau, conduite d'alimentation, etc.) ;
- du contrôle de la contaminateur beta et alpha de l'eau, lors d'un accident avec risque de contamination.

D'autres caractéristiques et avantages de l'invention apparaîtront mieux à la lecture du complément de description qui suit et qui se réfère aux figures annexées.

Bien entendu, ce complément de description n'est donné qu'à titre d'illustration de l'invention et ne constitue en aucun cas une limitation de celle-ci.

## BRÈVE DESCRIPTION DES DESSINS

La figure 1 représente, selon une vue en coupe, un système de détection selon un premier art antérieur, permettant de détecter des rayonnements ionisants de type gamma, alpha et beta.

La figure 2 représente, selon une vue en coupe, un détecteur selon un deuxième art antérieur.

La figure 3 est une représentation schématique, selon une vue en coupe, d'un premier mode de réalisation du détecteur à scintillation selon l'invention.

La figure 4 est une représentation schématique, selon une vue en coupe, d'un deuxième mode de réalisation du détecteur à scintillation selon l'invention.

Les figures 5a à 5d sont des représentations schématiques du premier séparateur selon un mode de réalisation particulier, respectivement selon une vue en perspective (figure 5a), de dessous (figure 5b), de dessus (figure 5c) et en coupe (figure 5d) selon la ligne AA.

## EXPOSÉ DÉTAILLÉ D'UN MODE DE RÉALISATION PARTICULIER

L'invention porte sur un détecteur à scintillation pour la mesure et/ou la détection de radionucléides dans un fluide, comprenant notamment un faisceau de fibres optiques scintillantes, un photomultiplicateur et un premier et un deuxième séparateur permettant de diminuer, au sein d'une zone de mesure, les turbulences autour des fibres optiques scintillantes.

Les fibres optiques scintillantes sont bien connues de l'homme du métier. Comme ce sont des fibres optiques, elles sont de très bons guides optiques et il n'y a donc pas de problème de collecte des photons induits par la scintillation. Elles permettent à la fois de produire la scintillation et de conduire les photons induits par la scintillation vers le photomultiplicateur.

Pour rappel, une fibre optique scintillante typique comprend un cœur en un matériau scintillateur (généralement, un matériau scintillateur plastique solide), entouré d'une ou plusieurs gaines en un matériau ayant un indice de réfraction inférieur à celui du cœur. Le matériau scintillateur est destiné à convertir un rayonnement ionisant de type alpha et/ou beta en photons. De préférence, les fibres optiques scintillantes sont choisies avec un diamètre de cœur le plus petit possible, afin de diminuer les interactions des rayonnements ionisants de type gamma et de pouvoir ainsi augmenter le volume de mesure $V_m$ en augmentant le nombre de fibres.

Les fibres optiques scintillantes les plus adaptées au détecteur objet de l'invention sont celles ayant une seule gaine, cette gaine ayant de préférence une épaisseur la plus fine possible. Dans le cas d'une mesure dans de l'eau, l'indice de réfraction de l'eau étant inférieur à celui du cœur de la fibre optique scintillante, on pourrait très bien envisager une utilisation de la fibre sans gaine extérieure, ce qui aurait pour avantage d'augmenter l'efficacité de détection, surtout pour les rayonnements alpha.

L'utilisation de fibres optiques scintillantes est très avantageuse. En effet, chaque fibre optique scintillante est vue comme un détecteur offrant un volume de mesure lié à la surface de celle-ci. Il est donc aisé d'augmenter le volume de mesure en augmentant la longueur de chaque fibre et/ou en augmentant le nombre de fibres du faisceau. On peut également augmenter le diamètre des fibres, tout en gardant en mémoire qu'une fibre de faible diamètre sera plus flexible (donc plus facile à déformer pour occuper un espace donné) et qu'il est préférable d'avoir des fibres de faible diamètre si l'on souhaite diminuer les interactions des rayonnements ionisants de type gamma. De préférence, on utilise des fibres optiques scintillantes ayant un diamètre inférieur à 300 $\mu$m.

Il est préférable que les fibres optiques scintillantes soient agencées, dans la zone de mesure, de manière à maximiser une surface de contact entre les fibres optiques scintillantes et le fluide à analyser, ceci afin de maximiser le volume de mesure $V_m$ et obtenir un rapport $V_m/V_t$ proche de 1. Pour ce faire, il est avantageux d'utiliser, dans la partie distale du faisceau destinée à être placée dans la zone de mesure, un moyen pour maintenir les fibres écartées. On peut par exemple placer une résine entre les fibres. C'est également la raison pour laquelle, selon une configuration préférée de l'invention, le corps latéral de la chambre de mesure s'étend selon une direction longitudinale et les fibres optiques scintillantes du faisceau de fibres s'étendent essentiellement parallèles à cette direction longitudinale.

On rappelle par ailleurs que, si l'on souhaite mesurer les rayonnements ionisants de type alpha et/ou beta, il est préférable que les fibres optiques scintillantes ne se touchent pas dans la zone de mesure. En effet, si les fibres du faisceau se touchent tout au long de leur longueur, cela revient à avoir une seule fibre ayant le diamètre équivalent à celui que le faisceau présente dans sa portion proximale. Or, plus une fibre optique scintillante aura un grand diamètre, plus elle aura tendance à être sensible aux rayonnements gamma, et ces rayonnements ayant une intensité supérieure aux rayonnements alpha et beta, ces derniers seront masqués par les rayonnements gamma.

Le photomultiplicateur comme dispositif de détection de photons est bien connu de l'homme du métier. Il permet de convertir les photons induits par la scintillation en des signaux électriques correspondants. Plus précisément, le photomultiplicateur convertit les photons en électrons et les multiplie afin de construire une impulsion électrique. Il peut par exemple s'agir d'un photomultiplicateur de type H10720 de chez Hamamatsu. Le photomultiplicateur peut être associé à un module de filtrage permettant le débruitage des impulsions électroniques (ce qui permet de discriminer les signaux trop faibles) et d'un module de comptage et de lissage donnant une valeur de taux de comptage (ce qui permet de mesurer le nombre de particules beta et/ou alpha présentes dans le fluide). Le module de filtrage ainsi que le module de comptage sont des fonctions intégrées à une carte électronique de traitement. Ces 2 fonctions (filtrage et comptage) sont des fonctions classiques que l'on retrouve sur toute carte d'acquisition de ce type.

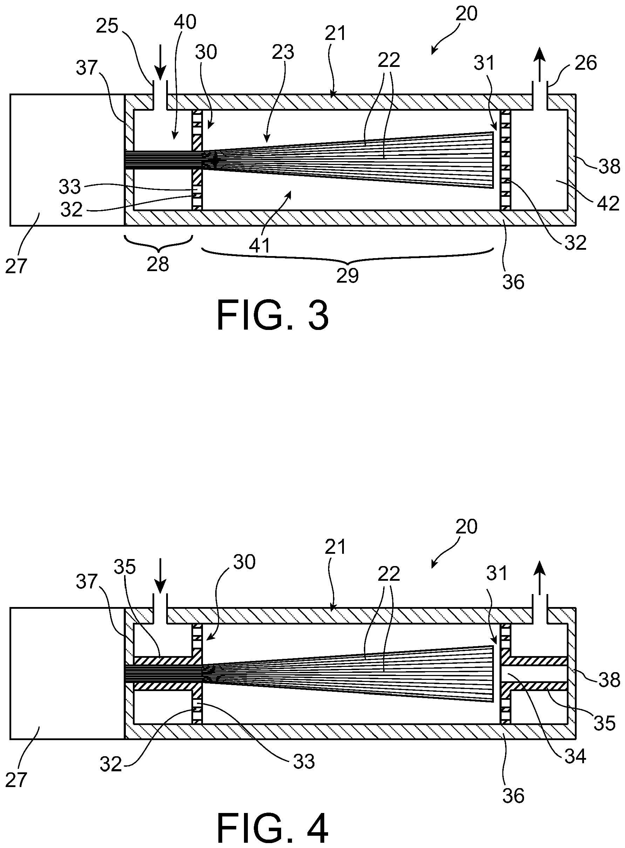

On a représenté sur la figure 3 un schéma d'un détecteur 10 selon un premier mode de réalisation de l'invention.

Le détecteur 20 comprend une chambre de mesure 21 équipée d'une entrée de fluide 25 et d'une sortie de fluide 26, un photomultiplicateur 27 et un faisceau 23 de fibres optiques scintillantes 22, le faisceau comprenant une portion proximale 28, reliée au photomultiplicateur 27, et une portion distale 29 destinée à se déployer dans la zone de mesure 41.

La chambre de mesure 21 comprend un corps latéral 36 qui s'étend selon une direction longitudinale entre deux extrémités 37, 38 (il s'agit de préférence d'un cylindre) et le faisceau 23 est logé dans la chambre de mesure, le faisceau ayant ses fibres disposées essentiellement parallèles à la direction longitudinale. Le photomultiplicateur 27 est situé à l'une des extrémités 37 du corps latéral.

Dans la figure 3, l'entrée 25 et la sortie 26 de fluide sont situées à proximité des deux extrémités du corps latéral de la chambre de mesure, ceci afin de maximiser les dimensions de la zone de mesure 41. Ils sont également disposés transversalement par rapport à la direction longitudinale de la chambre de mesure 21 (ils sont en outre placés du même côté du corps latéral, mais ils auraient pu également être situés sur deux côtés opposés).

Comme le sait l'homme du métier, le corps latéral 36 doit être en un matériau opaque aux rayonnements UV ou/et placé dans l'obscurité, afin de ne pas générer des scintillations dues à la lumière ambiante et, surtout, afin de ne pas saturer le photomultiplicateur.

Dans le cadre de l'invention, le volume de la chambre de mesure 21 est divisé en plusieurs zones à l'aide d'un premier 30 et d'un deuxième 31 séparateur. Le premier séparateur 30 permet de séparer la zone d'introduction 40 (comportant l'entrée de fluide 25) et la zone de mesure 41, tandis que le deuxième séparateur 31 permet de séparer la zone de mesure 41 de la zone d'extraction 42 (comportant la sortie de fluide 26).

Dans le mode de réalisation illustré dans la figure 3, la chambre de mesure 21 étant de forme générale cylindrique et de section circulaire, les premier 30 et deuxième 31 séparateurs sont des plaques 32, qui ont la forme de disques, percés d'ouvertures traversantes 33 telles que des perforations, en l'occurrence des trous circulaires.

En outre, comme le photomultiplicateur 27 est situé à une extrémité 37 de la chambre de mesure et que le faisceau 23 est disposé parallèle à la direction longitudinale de la chambre, le premier séparateur 30 comprend en outre un orifice 34 dimensionné pour permettre l'insertion du faisceau 23. De préférence, cet orifice est central et est circulaire.

Selon un mode de réalisation préféré illustré dans la figure 4, le premier séparateur 30 comprend en outre un élément tubulaire 35 dont une extrémité est solidaire de la plaque 32 en forme de disque et dont l'autre extrémité est plaquée contre l'une des parois d'extrémité 37 de la chambre de mesure. Ainsi, l'élément tubulaire 35 isole le faisceau 23 du flux entrant dans la zone d'introduction 40 et le faisceau débouche directement dans la zone de mesure 41 où les turbulences sont moindres.

Dans la figure 4, le deuxième séparateur 31 est identique au premier séparateur 30 et possède lui aussi un élément tubulaire 35. Pour éviter que l'orifice 34 de l'élément tubulaire ne crée de turbulences, l'extrémité de l'élément tubulaire du deuxième séparateur est plaquée contre l'autre des parois d'extrémité 38 de la chambre de mesure. Il est à noter que nous aurions également pu utiliser, pour le deuxième séparateur 31, une plaque 32 en forme de disque et percée comme celle utilisée dans la figure 3.

Pour les ouvertures traversantes 33 des premier et deuxième séparateurs, il est préférable que, au sein d'un même séparateur, elles soient identiques (même forme et même taille) et agencées de manière homogène. Il est également préférable qu'elles soient identiques et agencées de la même manière sur les deux séparateurs.

Pour chaque séparateur, le nombre d'ouvertures traversantes 33, leur forme, leur taille et leur disposition sont choisis de manière à établir un écoulement laminaire du fluide à analyser dans la zone de mesure. Bien sûr, la taille des ouvertures traversantes sera choisie inférieure à la taille de l'entrée 25 et de la sortie 26 de fluide.

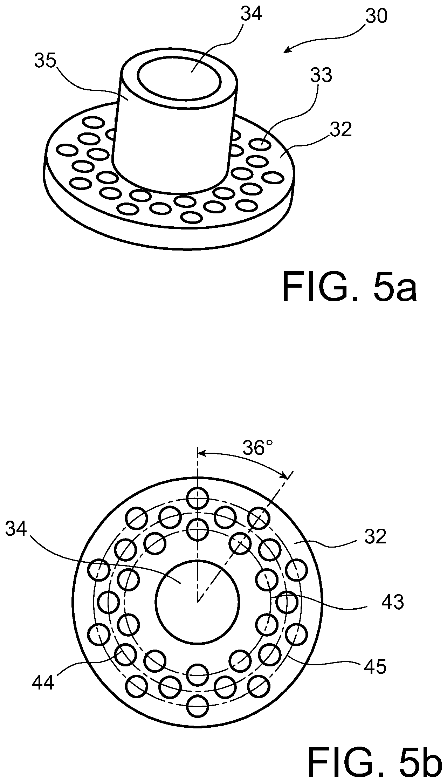

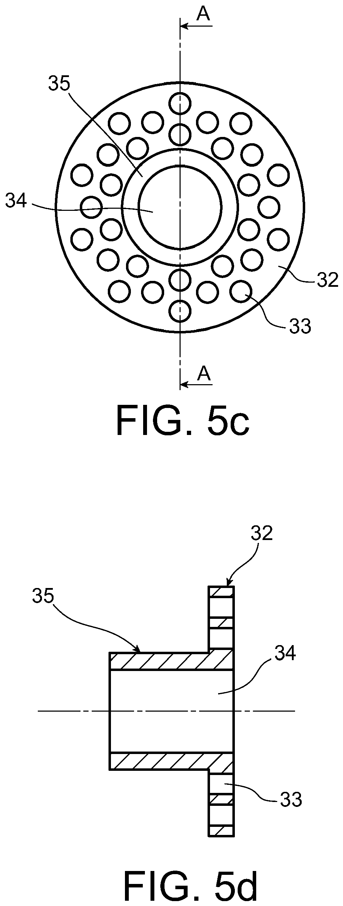

Dans les figures 5a à 5d est représentée une configuration possible des premier et deuxième séparateurs utilisés dans la figure 4. La plaque 32 en forme de disque a un diamètre de 59,5 mm, une épaisseur de 5 mm et un orifice 34 central d'un diamètre de 20,5 mm ; l'élément tubulaire 35 est un tube droit ayant un diamètre interne de 20,5 mm et un diamètre externe de 28 mm et une hauteur de 23,5 mm. Le disque est pourvu de 30 trous circulaires, agencés en 3 cercles de 10 trous centrés sur le même axe central que celui de l'orifice central ; les trous ont un diamètre de 5 mm ; le cercle intérieur 43, le cercle intermédiaire 44 et le cercle extérieur 45 ont respectivement un diamètre de 35 mm, 43 mm et 50 mm ; les trous de chacun des cercles sont disposés à un angle de 36° des trous adjacents situés sur un même cercle.

Le détecteur 20 selon l'invention peut être placé dans un circuit de distribution en eau, par exemple en étant disposé entre deux conduites ou bien encore dans une configuration similaire à celle utilisée pour la mise en place des cartouches de filtration. Cela permet ainsi que tout le flux d'eau circulant dans le circuit de distribution passe par le détecteur à scintillation, sans avoir à réaliser une dérivation.

Pour illustrer l'invention, nous avons réalisé un détecteur tel qu'illustré dans la figure 4, les premier et deuxième séparateurs ayant la configuration illustrée dans les figures 5a à 5d. La chambre de mesure 21 est un cylindre ayant un diamètre interne de 80 mm et une hauteur interne de 180 mm, soit un volume interne de 0,90 litre. L'entrée et la sortie de fluide ont un diamètre de 1,27 cm (½ pouce).

Dans notre exemple de réalisation, nous utilisons des fibres optiques scintillantes portant la référence BCF-10 de chez Saint-Gobain et qui présentent les caractéristiques suivantes :

- matériau du cœur: polystyrène ayant une densité de 1,05 ;
- indice de réfraction du cœur: 1,60 ;
- matériau de la gaine : poly(méthacrylate de méthyle) (PMMA)
- indice de réfraction de la gaine : 1,49
- pic d'émission : 432 nm ;
- temps de décroissance : 2,7 ns ;
- 1/e (pour une fibre ayant un diamètre de 1 mm) : 2,2 m ;
- nombre de photons par MeV : environ 8000

Les fibres de référence BCF-10 sont disponibles avec une section en coupe circulaire ou carrée, avec un diamètre ou un côté pouvant aller de 0,25 mm à 5 mm. L'épaisseur de la gaine représente 3% du diamètre de la fibre pour des fibres à section ronde.

Le volume de mesure $V_m$ est directement lié au nombre et à la longueur des fibres utilisées (ayant une section droite circulaire) selon la formule suivante :

$$V_m = \pi \times L \times N \times r \times (r + d)$$

où L est la longueur des fibres scintillantes, N est le nombre de fibres scintillantes, r est la distance parcourue par les particules considérées dans le fluide et d est le diamètre des fibres scintillantes.

On choisit d'utiliser 1000 fibres BCF-10 à gaine simple ayant un diamètre de cœur de 0,25 mm et une longueur de 30 cm et elles sont regroupées ensemble de façon à former un faisceau.

Le fluide que l'on introduit dans la chambre de mesure est ici de l'eau.

Si l'on considère des particules beta d'énergie 500 keV, on a une distance r=0,2 cm, comme indiqué dans le tableau ci-dessus et le volume de détection est de 4,24 litres.

Pour des particules beta d'énergie 100 keV, on a une distance r=0,14 mm et le volume de détection est de 0,051 litre.

Par conséquent, en utilisant un faisceau de 1000 fibres tel que défini ci-dessus pour un volume d'eau à analyser, qui est par exemple de l'ordre de 0,15 litre, l'efficacité de détection des particules beta de 500 keV est de 100% et de 34% pour celles de 100 keV.

Le détecteur selon l'invention permet une utilisation avec des volumes de fluide variés au-delà de 0,15 litre, tout en conservant l'efficacité de mesure du détecteur. Dans notre exemple de réalisation, le détecteur réalisé disposant d'un volume de chambre de mesure de l'ordre de 0,9 litre, si l'on souhaite obtenir 100% d'efficacité de détection des particules beta de 500 keV et 34% pour celles de 100 keV, il faudra augmenter proportionnellement le nombre de fibres optiques, c'est-à-dire utiliser 5829 fibres. A titre d'information, en utilisant un faisceau de 1000 fibres dans un volume de chambre de 0,9 litre, nous avons obtenu une efficacité de détection des particules beta de 100 keV égale à 5,8%.

**REFERENCES CITEES**

[1] tableau trouvé sur le site internet http://www.cloudylabs.fr/wp/portee-des-particules

**[2]** US 2008/0260100 A1
**[3]** US 5,793,046

**Revendications**

1. Détecteur à scintillation (20) pour la mesure et/ou la détection de radionucléides dans un fluide, ledit détecteur comportant :

   - une chambre de mesure (21) destinée à recevoir ledit fluide, ladite chambre comportant une entrée de fluide (25) et une sortie de fluide (26) afin d'autoriser une circulation du fluide dans la chambre ;
   - un photomultiplicateur (27) ;
   - une pluralité de fibres optiques scintillantes (22) regroupées ensemble pour former un faisceau (23) de fibres, lesdites fibres optiques scintillantes étant optiquement connectées au photomultiplicateur, le faisceau de fibres étant au moins partiellement logé dans la chambre de mesure ;

   le détecteur étant **caractérisé en ce que** la chambre de mesure (21) est munie d'un premier (30) et d'un deuxième (31) séparateur délimitant une zone d'introduction (40) comportant l'entrée de fluide (25), une zone d'extraction (42) comportant la sortie de fluide (26) et une zone de mesure (41), intermédiaire aux zones d'introduction et d'extraction, dans laquelle les fibres optiques scintillantes du faisceau sont déployées, le premier et le deuxième séparateur étant chacun pourvu d'une pluralité d'ouvertures traversantes (33) configurées pour établir un écoulement laminaire du fluide dans la zone de mesure (41).

2. Détecteur selon la revendication 1, dans lequel la chambre de mesure (21) comporte un corps latéral (36) qui s'étend selon une direction longitudinale et chacun des premier et deuxième séparateurs comporte une plaque (32) qui est disposée transversalement à la direction longitudinale et qui est solidaire du corps latéral, la pluralité d'ouvertures traversantes (33) étant disposées dans la plaque.

3. Détecteur selon la revendication 2, dans lequel le premier séparateur (30) comporte en outre un orifice traversant (34) qui est dimensionné pour permettre le passage du faisceau de fibres.

4. Détecteur selon la revendication 2, dans lequel le premier séparateur (30) comporte en outre un élément tubulaire (35) qui est solidaire d'une face de la plaque (32), l'élément tubulaire et la plaque ayant un orifice traversant commun (34) qui est dimensionné pour permettre le passage du faisceau de fibres, l'élément tubulaire étant configuré pour isoler le faisceau de fibres du fluide entrant dans la zone d'introduction.

5. Détecteur selon la revendication 3 ou la revendication 4, dans lequel le faisceau de fibres est agencé essentiellement parallèle à la direction longitudinale.

6. Détecteur selon la revendication 5, dans lequel la plaque (32) des premier et deuxième séparateur est un disque et l'orifice traversant (34) du premier séparateur est un trou circulaire central.

7. Détecteur selon l'une quelconque des revendications 2 à 6, dans lequel les zones d'introduction, de mesure et d'extraction se succèdent selon la direction longitudinale et l'entrée de fluide et la sortie de fluide sont disposées transversalement à la direction longitudinale.

8. Détecteur selon la revendication 1 à 7, dans lequel la pluralité d'ouvertures traversantes du premier séparateur sont agencées selon un premier motif et sont équidistantes les unes des autres et la pluralité d'ouvertures traversantes du deuxième séparateur sont agencées selon un deuxième motif et sont équidistantes les unes des autres, les premier et deuxième motifs étant de préférence identiques.

9. Détecteur selon la revendication 1 à 8, dans lequel la pluralité d'ouvertures traversantes du premier séparateur et la pluralité d'ouvertures traversantes du deuxième séparateur sont des trous circulaires ayant un même diamètre.

10. Détecteur selon la revendication 1 à 9, dans lequel chacune des ouvertures traversantes du premier séparateur est disposée en face d'une des ouvertures traversantes du deuxième séparateur.

11. Détecteur selon la revendication 1 à 10, dans lequel le faisceau de fibres comprend une portion proximale (28), qui est reliée au photomultiplicateur, et une portion distale (29), les fibres optiques scintillantes étant agencées serrées les unes contre les autres dans la portion proximale et espacées les unes des autres dans au moins une partie de la portion distale.

**12.** Détecteur selon la revendication 11, dans lequel la portion distale (29) du faisceau de fibres comprend au moins un élément configuré pour espacer les fibres les unes des autres.

**13.** Utilisation d'un détecteur à scintillation tel que défini dans l'une quelconque des revendications 1 à 12 pour la détection d'une contamination par des radionucléides dans un flux d'un fluide, de préférence dans un flux d'eau potable.

**Patentansprüche**

**1.** Szintillationsdetektor (20) zur Messung und/oder Erfassung von Radionukliden in einem Fluid, wobei der Detektor enthält:

- eine Messkammer (21), die dazu bestimmt ist, das Fluid aufzunehmen, wobei die Kammer einen Fluideinlass (25) und einen Fluidauslass (26) aufweist, um eine Zirkulation des Fluids in der Kammer zu ermöglichen;
- einen Photomultiplier (27);
- eine Vielzahl von szintillierenden optischen Fasern (22), die zu einem Faserbündel (23) gruppiert sind, wobei die szintillierenden optischen Fasern optisch mit dem Photomultiplier verbunden sind, wobei das Faserbündel zumindest teilweise in der Messkammer aufgenommen ist;

wobei der Detektor **dadurch gekennzeichnet ist, dass**
die Messkammer (21) mit einem ersten (30) und einem zweiten (31) Separator versehen ist, die einen Einleitbereich (40) mit dem Fluideinlass (25), einen Ausleitbereich (42) mit dem Fluidauslass (26) und einen Messbereich (41) zwischen dem Einleit- und dem Ausleitbereich, in dem die szintillierenden optischen Fasern des Bündels verlaufen, abgrenzen,
wobei der erste und der zweite Separator jeweils mit einer Vielzahl von Durchgangsöffnungen (33) versehen sind, die dazu ausgelegt sind, eine laminare Strömung des Fluids in dem Messbereich (41) zu erzeugen.

**2.** Detektor nach Anspruch 1,
wobei die Messkammer (21) einen seitlichen Körper (36) aufweist, der sich in einer Längsrichtung erstreckt, und sowohl der erste als auch der zweite Separator eine Platte (32) aufweist, die quer zur Längsrichtung angeordnet ist und die fest mit dem seitlichen Körper verbunden ist, wobei die Vielzahl von Durchgangsöffnungen (33) in der Platte angeordnet ist.

**3.** Detektor nach Anspruch 2,
wobei der erste Separator (30) ferner ein Durchgangsloch (34) aufweist, das so bemessen ist, dass es den Durchtritt des Faserbündels erlaubt.

**4.** Detektor nach Anspruch 2,
wobei der erste Separator (30) ferner ein rohrförmiges Element (35) enthält, das mit einer Seite der Platte (32) fest verbunden ist, wobei das rohrförmige Element und die Platte ein gemeinsames Durchgangsloch (34) aufweisen, das so bemessen ist, dass es den Durchtritt des Faserbündels ermöglicht, wobei das rohrförmige Element dazu ausgelegt ist, das Faserbündel von dem in den Einleitbereich einströmenden Fluid zu isolieren.

**5.** Detektor nach Anspruch 3 oder Anspruch 4,
wobei das Faserbündel im Wesentlichen parallel zur Längsrichtung angeordnet ist.

**6.** Detektor nach Anspruch 5,
wobei die Platte (32) des ersten und des zweiten Separators eine Scheibe ist und das Durchgangsloch (34) des ersten Separators ein zentrales kreisförmiges Loch ist.

**7.** Detektor nach einem der Ansprüche 2 bis 6, wobei der Einleit-, der Mess- und der Ausleitbereich in Längsrichtung aufeinander folgen und der Fluideinlass und der Fluidauslass quer zur Längsrichtung angeordnet sind.

**8.** Detektor nach Anspruch 1 bis 7,
wobei die mehreren Durchgangsöffnungen des ersten Separators in einem ersten Muster angeordnet sind und äquidistant zueinander verlaufen und die mehreren Durchgangsöffnungen des zweiten Separators in einem zweiten Muster angeordnet sind und äquidistant zueinander verlaufen, wobei das erste und das zweite Muster vorzugsweise identisch sind.

**9.** Detektor nach Anspruch 1 bis 8,
wobei mehreren Durchgangsöffnungen des ersten Separators und die mehreren Durchgangsöffnungen des zweiten Separators kreisförmige Löcher mit dem gleichen Durchmesser sind.

**10.** Detektor nach Anspruch 1 bis 9,
wobei jede der Durchgangsöffnungen des ersten Separators gegenüber einer der Durchgangsöffnungen des zweiten Separators angeordnet ist.

**11.** Detektor nach Anspruch 1 bis 10,
wobei das Faserbündel einen proximalen Abschnitt (28), der mit dem Photomultiplier verbunden ist, und einen distalen Abschnitt (29) aufweist, wobei die szintillierenden optischen Fasern im proximalen Abschnitt dicht beieinander angeordnet sind und in mindestens einem Teil des distalen Abschnitts voneinander beabstandet sind.

**12.** Detektor nach Anspruch 11,
wobei der distale Abschnitt (29) des Faserbündels mindestens ein Element aufweist, das dazu ausgelegt ist, die Fasern voneinander zu beabstanden.

**13.** Verwendung eines Szintillationsdetektors nach einem der Ansprüche 1 bis 12 zur Erfassung einer Radionuklidkontamination in einem Fluidstrom, vorzugsweise in einem Trinkwasserstrom.


**Claims**

**1.** Scintillation detector (20) for measuring and/or detecting radionuclides in a fluid, said detector comprising:

- a measuring chamber (21) intended to receive said fluid, said chamber comprising a fluid inlet (25) and a fluid outlet (26) in order to authorise a circulation of fluid in the chamber;
- a photomultiplier (27);
- a plurality of scintillating optical fibres (22) grouped together to form a bundle (23) of fibres, said scintillating optical fibres being optically connected to the photomultiplier, the bundle of fibres being at least partially housed in the measuring chamber;

the detector being **characterised in that** the measuring chamber (21) is provided with a first (30) and with a second (31) separator delimiting an introduction zone (40) comprising the fluid inlet (25), an extraction zone (42) comprising the fluid outlet (26) and a measuring zone (41), between the introduction and extraction zones, wherein the scintillating optical fibres of the bundle are deployed,
the first and the second separator each being provided with a plurality of through-openings (33) configured to establish a laminar flow of the fluid in the measuring zone (41).

**2.** Detector according to claim 1, wherein the measuring chamber (21) comprises a lateral body (36) that extends along a longitudinal direction and each one of the first and second separators comprises a plate (32) which is arranged transversally to the longitudinal direction and which is integral with the lateral body, the plurality of through-openings (33) being arranged in the plate.

**3.** Detector according to claim 2, wherein the first separator (30) further comprises a through-orifice (34) that is sized to allow for the passage of the bundle of fibres.

**4.** Detector according to claim 2, wherein the first separator (30) further comprises a tubular element (35) that is integral with a face of the plate (32), the tubular element and the plate having a common through-orifice (34) that is sized to allow for the passage of the bundle of fibres, the tubular element being configured to isolate the bundle of fibres from the fluid entering into the introduction zone.

5. Detector according to claim 3 or claim 4, wherein the bundle of fibres is arranged substantially parallel to the longitudinal direction.

6. Detector according to claim 5, wherein the plate (32) of the first and second separator is a disc and the through-orifice (34) of the first separator is a central circular hole.

7. Detector according to any of claims 2 to 6, wherein the introduction, measuring and extraction zones follow one another along the longitudinal direction and the fluid inlet and the fluid outlet are arranged transversally to the longitudinal direction.

8. Detector according to claim 1 to 7, wherein the plurality of through-openings of the first separator are arranged according to a first pattern and are equidistant from one another and the plurality of through-openings of the second separator are arranged according to a second pattern and are equidistant from one another, the first and second patterns being preferably identical.

9. Detector according to claim 1 to 8, wherein the plurality of through-openings of the first separator and the plurality of through-openings of the second separator are circular holes having the same diameter.

10. Detector according to claim 1 to 9, wherein each one of the through-openings of the first separator is arranged facing one of the through-openings of the second separator.

11. Detector according to claim 1 to 10, wherein the bundle of fibres comprises a proximal portion (28), which is connected to the photomultiplier, and a distal portion (29), the scintillating optical fibres being arranged tightly against one another in the proximal portion and spaced from one another in at least one portion of the distal portion.

12. Detector according to claim 11, wherein the distal portion (29) of the bundle of fibres comprises at least one element configured to space the fibres from one another.

13. Use of a scintillation detector such as defined in any of claims 1 to 12 for detecting a contamination by the radionuclides in a flow of a fluid, preferably in a flow of drinking water.

EP 3 542 185 B1

FIG. 1
(art antérieur)

FIG. 2
(art antérieur)

16

12

FIG. 3

FIG. 4

FIG. 5a

FIG. 5b

FIG. 5c

FIG. 5d

## RÉFÉRENCES CITÉES DANS LA DESCRIPTION

**Documents brevets cités dans la description**

- US 20080260100 A1
- US 5793046 A